# EUROPEAN PATENT APPLICATION

(11) **EP 2 874 458 A1**
(43) Date of publication of application: **20.05.2015**
(21) Application number: 13192965.5
(22) Date of filing: 14.11.2013
(51) Int. Cl.: H04W 74/00, H04W 74/04

(54) **Contention-free access in wireless communication system**

(71) Applicant: FUJITSU LIMITED, Kawasaki-shi Kanagawa 211-8588 (JP)
(72) Inventor: Moulsley, Timothy, Caterham, Surrey CXR3 5EE (GB); Fang, Yiwei, High Wycombe, HP11 1GD (GB)
(74) Representative: Stebbing, Timothy Charles

(57) **Abstract**

A contention-free activation/deactivation mechanism in PRACH, which allows dynamic allocation of the contention-free and contention-based preambles. This allows contention-free preambles which have been allocated to a UE to be revoked once contention-free operation is no longer needed, or cannot be supported due to a shortage of preambles. In one embodiment, a terminal is configured (S12) with a contention-free preamble by specific signalling, and thereafter monitors periodic broadcasts (S14) indicating the set of contention-free preambles; if the configured preamble is within the set (S16, "Y"), the preamble is activated for contention-free operation (S18); otherwise (S16, "N"), the preamble is deactivated and the terminal should follow the contention-based procedure (S20).

## Description

### Field of the Invention

The present invention relates to a random access method in a wireless communication system comprising a base station and subscriber stations for transmitting transmission data to the base station. The present invention further relates to a subscriber station, to a base station and a computer program for use in said method.

Particularly, but not exclusively, the present invention relates to uplink communication procedures in accordance with the LTE (Long Term Evolution) and LTE-Advanced radio technology standards as, for example, described in the 3GPP TS36 series specifications, Release 9, 10 and subsequent of the 3GPP specification series. However, the present invention is also applicable to UMTS, WiMAX and other communication systems in which a subscriber station (also referred to as "user terminal", "user equipment" or UE, "mobile terminal" etc.) attempts initial access using a random access method.

### Background of the Invention

Wireless communication systems are widely known in which base stations (BSs) provide "cells" and communicate with subscriber stations within range of the BSs. In LTE for example, the base stations are generally called eNodeBs or eNBs and the subscriber stations are called user equipments or UEs.

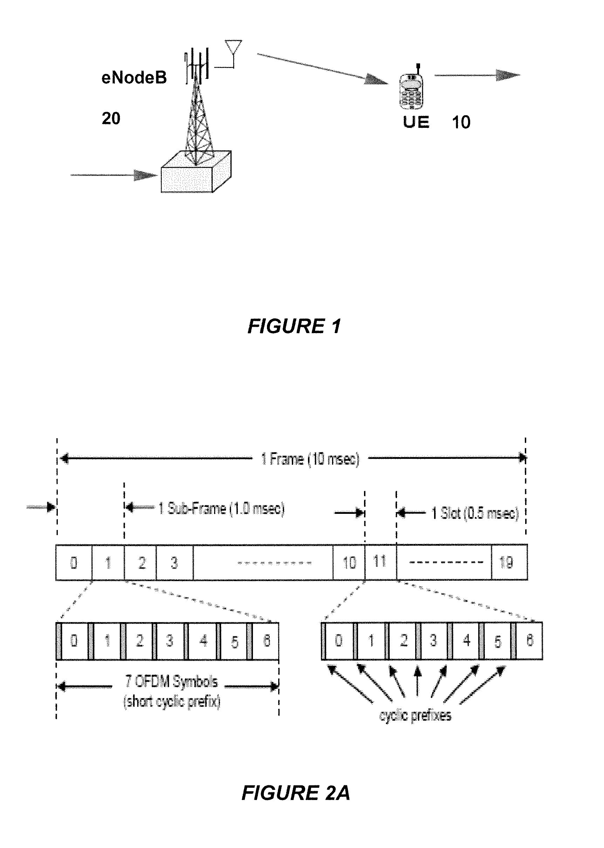

Figure 1 shows such a system at its simplest, in which an eNodeB 20 performs wireless communication of information (user data) and control signalling with a UE 10. The arrows in the Figure show the direction of downlink transmission; there is also uplink communication from the UE back to the base station. The base station also exchanges information and control signalling with higher-level nodes (not shown) in the wireless communication system, as indicated by the arrow.

In such a system, each BS divides its available frequency and time resources in a given cell, into individual resource allocations for the user equipments which it serves, in other words those UEs which have a connection with the BS. The user equipments are generally mobile and therefore may move among the cells, prompting a need for handovers of radio communication links between the base stations of adjacent cells. RRC, or Radio Resource Control, is responsible among other things for signalling related to connection management and handovers to other base stations. A user equipment may be in range of (i.e. able to detect signals from) several cells at the same time, but in the simplest case it communicates with one "serving" cell or "primary" cell. A wireless communication system, and the cells within it, may be operated in FDD (Frequency Division Duplex) or TDD (Time Division Duplex) mode.

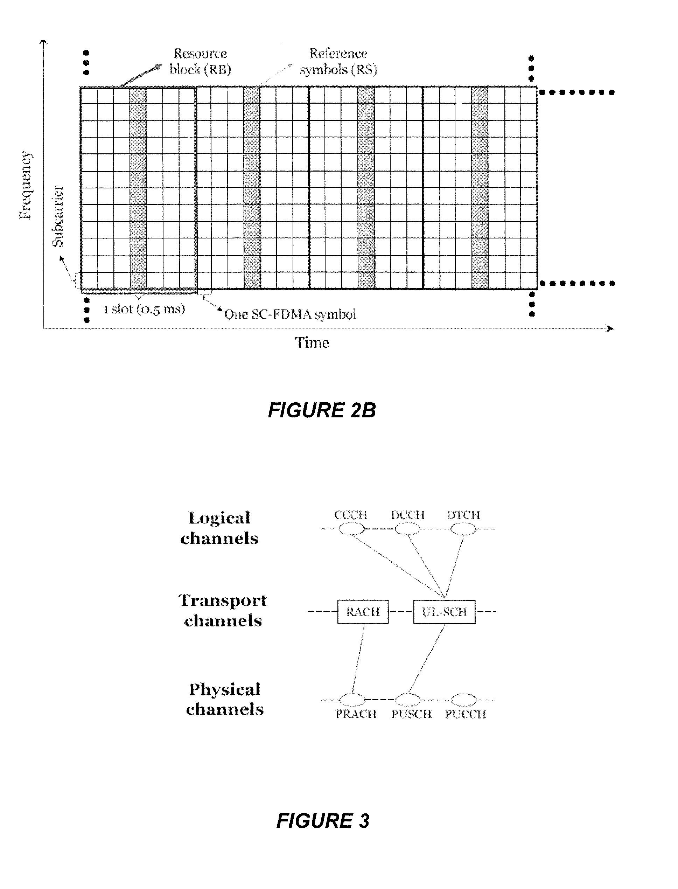

Figures 2A and 2B show the basic units used for resource allocation in the LTE system. Resources in the system have both a time dimension and a frequency dimension. Time in the system is divided in units of a symbol time or "slot" (where a "slot" has typically a duration of seven symbol times), as indicated in Figure 2A. Two successive slots form a "subframe" and (in this example) ten subframes form a "frame". The frequency bandwidth available in the system is divided into a number of sub-carriers as shown in Figure 2B.

Thus, the transmitted signal in each slot is described by a resource grid of sub-carriers and available OFDM symbols. Each element in the resource grid is called a resource element (RE) and each resource element corresponds to one modulation symbol (assuming OFDM transmission). An amount of resource consisting of a set number of subcarriers and OFDM symbols (in this example, 12 subcarriers x 7 symbols) is referred to as a resource block (RB) in LTE, as indicated by the bold outline in Figure 2B.

The REs available for use by UEs are allocated by a scheduling function at the eNodeB. Such scheduling is usually determined separately for each subframe; in other words the resource allocation of a UE may vary from one subframe to the next. Resources are allocated to UEs both for downlink (DL) and uplink (UL) transmission, although uplink transmission is of most relevance to the invention to be described. UEs which have established a connection with the eNodeB are synchronized with the eNodeB and configured with a suitable timing advance (if necessary), so that their allocated downlink and uplink resources can be fully "orthogonal" (non-interfering) with those of other UEs.

In LTE, several channels for data and control signalling are defined at various levels of abstraction within the system.

Figure 3 shows some of the uplink channels defined in LTE at each of a logical level, transport layer level and physical layer level, and the mappings between them. User data and also some signalling data is carried on a Physical Uplink Shared Channel (PUSCH). By means of frequency hopping on PUSCH, frequency diversity effects can be exploited and interference averaged out. The control channels include a Physical Uplink Control Channel, PUCCH, used to carry signalling from UEs including channel state information (CSI), as represented for example by channel quality indication (CQI) reports, and scheduling requests. Of most interest for present purposes, there is also a Physical Random Access Control Channel, PRACH along with a corresponding Random Access Channel, RACH at the transport layer level. Mapping between the logical channels and transport layer channels is the responsibility of Medium Access Control, MAC. In addition to the above channels, uplink resources are also allocated to reference signals, as indicated by the shaded REs in Figure 2B.

Meanwhile, on the downlink (not illustrated), user data and higher layer signalling (e.g. for RRC) is carried on the Physical Downlink Shared Channel (PDSCH). Other control channel signalling (e.g. for specifying the above mentioned resource allocation) is carried by the Physical Downlink Control Channel, PDCCH. In LTE-A, there is also provision for a new control channel called EPDCCH or Enhanced PDCCH. This reuses some resource blocks previously used for PDSCH in order to provide additional capacity for supporting multi-carrier and multi-cell scenarios. In addition, there is a physical broadcast channel, PBCH, for conveying information which UEs need in order to access a cell.

As already mentioned, UEs which have obtained timing synchronization with the network will be scheduled with uplink resources which are orthogonal to those assigned to other UEs. The Physical Random Access Channel PRACH is used to carry the Random Access Channel (RACH) for accessing the network if the UE does not have any allocated uplink transmission resource. Thus, initiation by the UE of the transport channel RACH implies use of the corresponding physical channel PRACH, and henceforth the two terms RACH and PRACH will be used interchangeably to some extent. If a scheduling request (SR) is triggered at the UE, for example by arrival of data for transmission on PUSCH, when no PUSCH resources have been allocated to the UE, the SR is transmitted on a dedicated resource for this purpose. If no such resources have been allocated to the UE, the RACH procedure is initiated. PRACH may also be used if the number of SR attempts on PUCCH, without receiving a grant on PUSCH, exceeds a threshold. The details may depend on configuration.

Thus, RACH is provided to enable UEs to transmit signals in the uplink without having any dedicated resources available, such that more than one terminal can transmit in the same PRACH resources simultaneously. The term "Random Access" is used because (except in the case of contention-free RACH, described below) the identity of the UE (or UEs) using the resources at any given time is not known in advance by the network (incidentally, in this specification the terms "system" and "network" are used interchangeably). So-called "signatures" (see below) are employed by the UEs to allow the eNodeB to distinguish between different sources of transmission. Unlike the RACH in WCDMA for example, the LTE RACH is not designed to carry any user data.

RACH can be used by the UEs in either of contention-based and contention-free modes. In contention-based access, UEs select any signature at random, at the risk of "collision" at the eNodeB if two or more UEs accidentally select the same signature. Contention-free access avoids collision, by the eNodeB informing each UE which signature it may use.

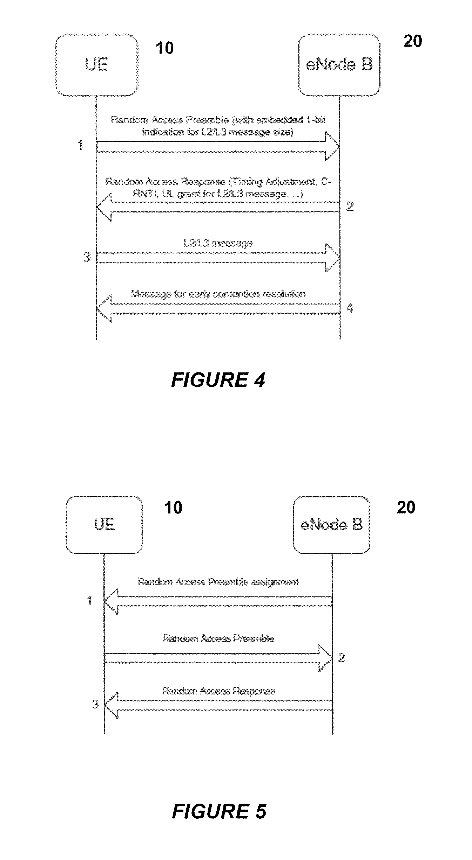

Referring to Figure 4, the Physical Random Access Channel PRACH typically operates as follows (for contention based access):-
(i) The network, represented in Figure 4 by an eNodeB 20, transmits a broadcast channel PBCH which can be received by all UEs within range (whether or not they are connected to the eNodeB). The PBCH is transmitted in parts, once per frame, and a complete PBCH spans four frames. The UE 10 receives PBCH for the cell of interest. The information in the PBCH allows the UE to receive further system information blocks (SIBs).
(ii) The SIBs convey various cell-specific information needed for UEs that wish to join the cell, including:
   - time/frequency resources available for PRACH
   - signatures available for contention-based RACH (up to 64)
   - signatures corresponding to small and large message sizes.
   The signatures each have a numerical index and the available signatures are indicated by use of a number, with all signatures identified by indices up to this number being available for contention-based access.
(iii) The UE selects, at random, a PRACH preamble signature according to those available for contention based access and the intended message size. The term "signature" is generally used to refer to characteristics of the particular PRACH preamble transmission. In LTE this corresponds to the preamble sequence. More generally the signature may include the time domain resources and/or the frequency domain resources. Henceforth the terms "preamble", "preamble sequence", "preamble signature" and "signature" will be used interchangeably, unless the context demands otherwise.
(iv) The UE 10 transmits the PRACH preamble (also called "Message 1", indicated by "1" in the Figure) on the uplink of the serving cell. The eNodeB 20 receives Message 1 and estimates the transmission timing of the UE. The PRACH preamble transmitted by a UE, having a certain signature, results in a distinctive waveform being received by the eNodeB, and the eNodeB makes a decision about which signature(s) the waveform corresponds to, by correlating it with all the possible transmitted signatures.
(v) The UE 10 monitors a specified downlink channel for a response from the network (in other words from the eNodeB). In response to the UE's transmission of Message 1, the UE 10 receives a Random Access Response or RAR ("Message 2" indicated by "2" in Figure 4) from the network. This contains an UL grant for transmission on PUSCH and a Timing Advance (TA) command for the UE to adjust its transmission timing.
(vi) In response to receiving Message 2 from the network, the UE 10 transmits on PUSCH ("Message 3", shown at "3" in the Figure) using the UL grant and TA information contained in Message 2.
(vii) As mentioned in (iii) above, the UE selects the preamble sequence at random. There is consequently the chance that the same preamble sequence may coincidentally be chosen by another UE also initiating random access. As indicated at "4", a contention resolution message may be sent from eNodeB 20 in the event that the eNodeB 20 received the same preamble signature simultaneously from more than one UE, and more than one of these UEs transmitted Message 3.

If the UE does not receive any response from the eNodeB, the UE selects a new signature and sends a new transmission in a RACH sub-frame after a random back-off time.

For contention free RACH access, the procedure is similar except that the UE is configured with a dedicated signature. Figure 5 shows the procedure in this case.

In the step labelled "1" in the Figure, the eNodeB 20 configures the UE 10 with a specific dedicated preamble which that UE should use for contention-free RACH. Conventionally, it is assumed that the UE will "keep" this preamble (in other words, continue to have the right to use it for contention-free access) for an extended period or indefinitely. Such configuration takes place via RRC (high-level) signalling which is considered a form of semi-static signalling, and in this case is UE-specific (that is, a message is sent to each UE to which a dedicated preamble is allocated).

At some later point, when the UE 10 determines a need for RACH access, it transmits the configured preamble to the eNodeB using PRACH. The eNodeB recognises which UE has sent the preamble from the received signature, and responds with a Random Access Response as labelled at "3". It will be seen that the contention-free procedure has fewer steps and, since contention resolution is not required, will typically be quicker to complete than contention-based RACH, offering lower latency.

In the contention based procedure, the message at step "2" provides the UE with a value for Temporary C-RNTI (temporary Cell Radio Network Temporary Identifier) which would be confirmed as the C-RNTI during the contention resolution phase, if the UE does not already have a value for C-RNTI. In the contention free procedure this Temporary C-RNTI value should be the same as the one the UE is already using, and the L2/L3 message at step "3" of Figure 4 is not sent. One consequence of these differences is that if the network is not sure of the identity of a UE sending a particular signature, then it should apply the contention based procedure.

Situations where the RACH process is used include:
- Initial access from RRC_IDLE
- RRC connection re-establishment
- Handover
- DL data arrival in RRC_CONNECTED (when non-synchronised)
- UL data arrival in RRC_CONNECTED (when non-synchronised, or no SR resources are available)
- Positioning (based on Timing Advance)

The RACH procedure can be triggered in response to a PDCCH order (e.g. for DL data arrival, or positioning). Contention free RACH is only applicable for handover, DL data arrival and positioning.

As already mentioned, there is a fixed number of signatures (64) available in each cell. Consequently, it is necessary to partition the signatures between those used for contention-based access, and those used for contention-free access.

Conventionally, this partitioning is semi-static. The set of signatures for contention-based access is broadcast to all UEs in the cell, whilst UE-specific signalling is used to notify each UE of a specific signature which it may use for contention-free access.

It would be desirable to permit such partitioning of the available signatures to be performed more dynamically, and with less need for UE-specific signalling.

### Summary of the Invention

According to a first aspect of the present invention, there is provided a wireless communication method for use in a wireless communication system comprising a base station communicating with at least one terminal, the method comprising:
the base station configuring the terminal with a preamble signature to be used for transmission of a preamble in a contention-free random access procedure; and
the base station, by subsequent signalling, dynamically activating and/or deactivating the use by the terminal of the preamble signature in the contention-free random access procedure.

Here, "dynamically" implies signalling which is on a shorter timescale and more flexible than is possible with UE-specific semi-static signalling. Conventional configuration of dedicated contention-free preambles is semi-static and UE-specific, in other words unchanging on a relatively long timescale of the order of several seconds (several frames) or longer. By contrast, the present invention enables the contention-free preambles to be deactivated or reactivated dynamically, that is, on a subframe by subframe basis, or by broadcast signalling that does not require a signalling message specific to each UE. Dynamically activating/deactivating preambles can be performed at the MAC or physical layer level, by MAC or PDCCH (including EPDCCH) signalling. For comparison, UE-specific semi-static signalling (including the initial configuration of a UE with a contention-free preamble) would be performed by RRC which tends to involve larger message sizes and is slower. In some embodiments of the present invention, the subsequent signalling comprises a broadcast to all terminals served by the base station.

The subsequent signalling may include an indication of the preamble signatures available for contention-based random access.

Alternatively, or in addition, the subsequent signalling includes an indication of the preamble signatures available for contention-free random access.

Such indications may be provided in the form of a bit map representing a set of preamble signatures.

Instead of, or in addition to the above mentioned broadcast, the subsequent signalling may comprise fast signalling from the base station to the terminal. In this case, preferably, the configuring is performed by Radio Resource Control, RRC, signalling and the subsequent signalling comprises MAC, PDCCH or EPDCCH signalling.

In any method as defined above, preferably, the terminal determines whether to perform a contention-free or contention-based random access procedure by checking whether the configured preamble signature is activated or deactivated and if activated, follows the contention-free random access procedure. When the configured preamble signature is deactivated, the terminal follows the contention-based random access procedure.

In one embodiment, the subsequent signalling identifies a set of all preambles available for contention-based access and the terminal determines its configured preamble as activated if the configured preamble falls outside the identified set; otherwise the terminal determines the configured preamble as deactivated.

The above mentioned "preamble signature" will normally include a preamble sequence, but more generally the preamble signature is characterised by at least one of:
a preamble sequence;
a time domain resource for transmission of the preamble; and
a frequency domain resource for transmission of the preamble.

According to a second aspect of the present invention, there is provided a wireless communication system comprising a base station and at least one terminal, wherein:
the base station is arranged to configure the terminal with a preamble signature to be used for transmission of a preamble in a contention-free random access procedure, and to transmit subsequent signalling; and
the terminal is arranged to receive the configuration, to receive the subsequent signalling, and to determine whether or not to use the configured preamble signature in a contention-free random access procedure in dependence on the subsequent signalling.

According to a third aspect of the present invention, there is provided a base station for use in a wireless communication system comprising the base station and at least one terminal, wherein:
the base station is arranged to configure the terminal with a preamble signature to be used for transmission of a preamble in a contention-free random access procedure, and to transmit subsequent signalling for dynamically activating and/or deactivating the use by the terminal of the preamble signature in the contention-free random access procedure.

According to a fourth aspect of the present invention, there is provided a terminal for use in a wireless communication system comprising the terminal and a base station serving the terminal, wherein the terminal is arranged to be configured by the base station with a preamble signature to be used for transmission of a preamble in a contention-free random access procedure, and to receive subsequent signalling for dynamically activating and/or deactivating the use by the terminal of the preamble signature in the contention-free random access procedure.

According to a fifth aspect of the present invention, there is provided computer-readable instructions which, when executed by a processor of a transceiver device in a wireless communication system, cause the device to provide the subscriber station or the base station as defined above. Such instructions may be stored on one or more computer-readable media.

Thus, embodiments of the present invention involve a contention-free activation/deactivation mechanism in PRACH, which allows allocation/de-allocation of the contention-free and contention-based preambles dynamically or by means of broadcast signalling without the need for UE-specific signalling. This allows contention-free preambles which have been allocated to a UE to be revoked efficiently once contention-free operation is no longer needed, or cannot be supported due to a shortage of preambles.

This mechanism can improve the efficiency of PRACH, alleviating the drawbacks which result when the configuration of the UE to use contention-based and contention-free preamble signatures, from the fixed number of preamble signatures, is determined semi-statically by UE-specific signalling. Embodiments of the present invention make the split between the two categories of preamble signatures dynamic and thus improve the efficiency of PRACH. When enough preamble signatures are available, UEs can benefit from contention-free access. When contention-free access is not appropriate, UEs which have not been allocated with contention-free preamble signatures may be given a larger selection of contention-based preambles to choose from, reducing the chance of a random access collision.

In general, and unless there is a clear intention to the contrary, features described with respect to one aspect of the invention may be applied equally and in any combination to any other aspect, even if such a combination is not explicitly mentioned or described herein.

As is evident from the foregoing, the present invention involves signal transmissions between a terminal and a base station in a wireless communication system. The "terminal" referred to here, also referred to as a subscriber station or UE, may take any form suitable for transmitting and receiving such signals. For the purpose of visualising the invention, it may be convenient to imagine the terminal as a mobile handset but no limitation whatsoever is to be implied from this. In preferred embodiments of the present invention, the base station will typically take the form proposed for implementation in the 3GPP LTE and 3GPP LTE-A groups of standards, and may therefore be described as an eNodeB (eNB) (which term also embraces Home eNodeB or HeNB) as appropriate in different situations. However, subject to the functional requirements of the invention, the base station may take any other form suitable for transmitting and receiving signals from terminals.

### Brief Description of the Drawings

Reference is made, by way of example only, to the accompanying drawings in which:
Figure 1 illustrates a resource block (RB) on the uplink of an LTE wireless communication system;
Figure 2A shows the relationship between frames, subframes and slots in LTE, and Figure 2B shows resource blocks formed in successive slots;
Figure 3 shows relationships between various uplink channels defined in LTE;
Figure 4 shows a contention-based RACH procedure in LTE;
Figure 5 shows a contention-free RACH procedure in LTE;
Figure 6 is a flowchart of steps in embodiments of the present invention;
Figure 7 shows monitoring of broadcast contention-free preamble information by UEs;
Figure 8 is a schematic diagram of a UE to which the present invention may be applied; and
Figure 9 is a schematic diagram of an eNodeB to which the present invention may be applied.

### Detailed Description

The inventors envisage new uses for contention-free (rather than contention-based) access in LTE, such as for requesting uplink resources. However, given that the total number of available preambles for contention-based and contention-free access is fixed, it is apparent that if more preambles are made contention-free and allocated to individual UEs, then fewer preambles will be left over for contention-based access, increasing the risk of collision and consequent need for contention resolution.

It is crucial to find the right balance. Since, in current LTE systems, the total number of preambles is fixed, a more dynamic and efficient switching mechanism, between contention-based and contention-free access will help to ensure that as many UEs as possible that would benefit from contention-free access can be allocated a contention-free preamble, and that those using contention-based will have a sufficiently large set of preambles from which to select, to minimise delays due to contention resolution. In order to respond to changes such as different numbers of active UEs and variations in traffic, it would be desirable to be able to control the use of contention-free preambles dynamically. It would also be desirable to minimise the signalling overhead.

In view of the above, a principle in embodiments of the present invention is to provide a contention-free access revoking mechanism so as to be able to revoke (or alternatively, to re-activate) a contention-free access preamble allocation to a UE in a timely way.

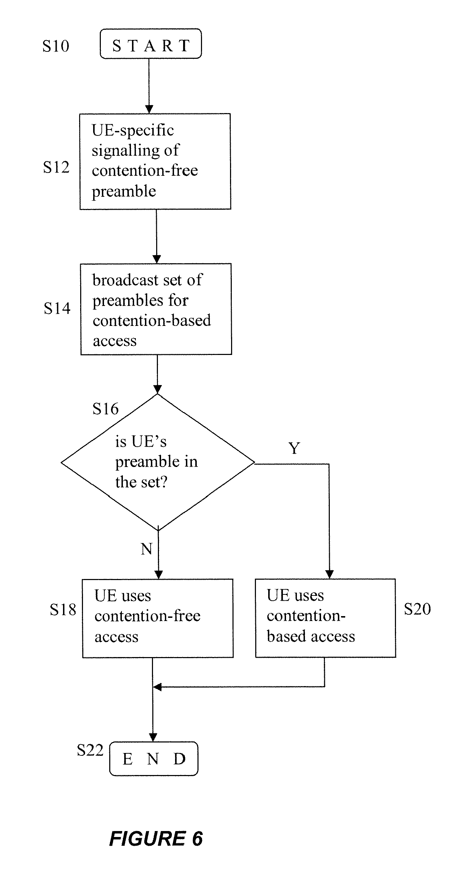

This principle is described with respect to Figure 6 by way of example, which with variations applies to all of the later-described embodiments. The process starts at step S10. In step S12, a specific UE that is going to be allocated with a contention-free preamble signature receives, from the eNodeB, UE-specific signalling to notify it of the preamble which it has been allocated. This may occur in the conventional manner, for example, by RRC signalling when a UE joins a cell controlled by the eNodeB, or is being prepared for handover to another cell.

Normally only one such preamble signature at a time would be allocated per UE. Typically the preamble so allocated would be reserved exclusively to that UE (that is, not used by any other UE in the same cell), but as described later this is not necessarily the case.

In step S14, and periodically during operation of the wireless communication system (for example, once every 20ms, the eNodeB broadcasts a message specifying the preamble signatures available for contention-based access, which implicitly also indicates the preambles available for contention-free access.

Preferably, but not essentially, this message identifies available preamble signatures individually, rather than using a single numerical index as employed in the conventional broadcast channel (see above). Various possible forms of such a message are possible as described below.

For example, this message takes the form of a bit map showing, for each of the possible 64 preambles, which preambles are designated contention-free preambles. In such a bit map, a preamble available for contention-free access might be indicated by a "1" in a position which implicitly identifies one of the 64 available, with a "0" indicating that the preamble is to be used for contention-based access (or vice-versa). Thus, the bit map may take the form of a bit string 64 bits long, for example. In other words, the message informs each UE within range of a set of preambles currently in use as contention-free preambles, and (at least implicitly) a complementary set of preambles currently in use for contention-based access.

If it is desired to be able to make some signatures unavailable for either contention-based or contention-free access, this can be indicated with a multi-level version of the above bit map such as: "0" = not available, "1" = contention-based, "2" = contention-free.

The above message may also specify the time and frequency resources on which PRACH may be sent.

Then, the UE decides the need to initiate a RACH procedure for some reason (possible reasons were given in the introduction). In step S16, the UE checks whether or not its allocated contention-free preamble is contained in the set for contention-based access contained in the last broadcast message. If it is not included, (S16, "N") this means that the preamble is still available for contention-free access and the UE employs the contention-free access procedure (Figure 5) accordingly. If the UE does find its allocated preamble signature in the broadcast set (S16, "Y"), that means that the preamble is required for contention-based access (implying that it has been withdrawn from use for contention-free access). In this case, the UE proceeds to follow the contention-based procedure according to Figure 4, using any preamble selected at random from among the contention-based preambles.

Thus, in contrast to current LTE specifications, the fact that a UE has been configured with a contention-free preamble does not necessarily mean that the UE may continue to employ that preamble indefinitely for contention-free access. Embodiments of the present invention separate the configuration of a UE with a specific preamble, from the right to use that preamble, which may be deactivated or reactivated on a dynamic basis by the eNodeB as conditions in the cell change.

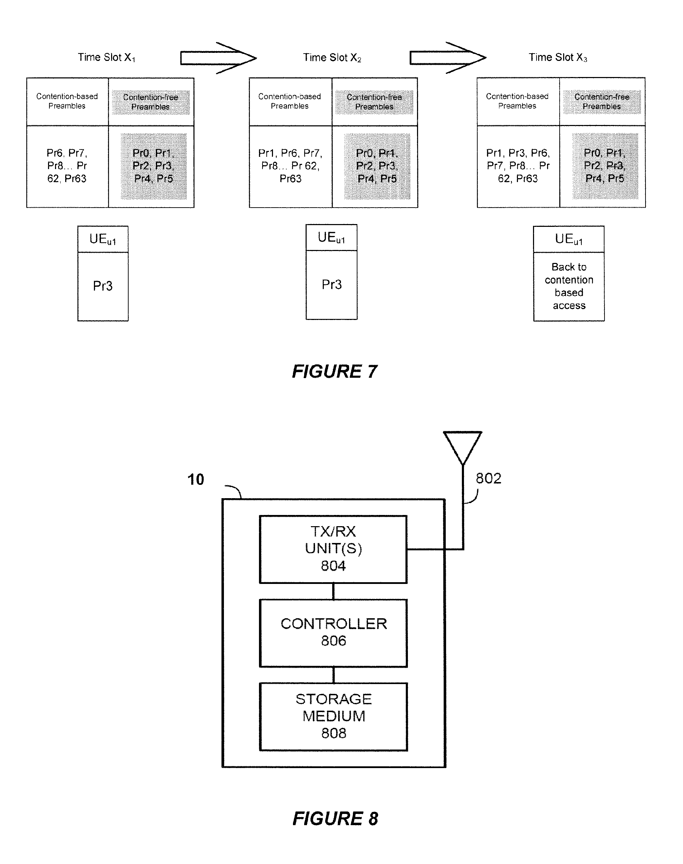

Figure 7 illustrates the monitoring and selection process in more detail. The reference signs Pr0, Pr1....Pr63 represent the individual preambles in the set of 64 available preambles. X₁, X₂ and X₃ are successive time slots for periodic broadcast of the contention-free preambles in use (not to be confused with the "slots" shown in Figures 2A and 2B).

At time slot X₁, a given UE, UEᵤ₁ which has been allocated the preamble Pr3, receives the broadcast of a bit map indicating the contention-based preambles and (indicated by shading) the contention-free preambles. The UE recognises its allocated preamble Pr3 among the set of contention-free preambles, and therefore if this UE needs to perform RACH it does so using the contention-free preamble Pr3 as indicated in the lower part of the Figure.

At a later time slot X₂, the split of preambles has changed slightly with Pr1 being moved to the set of contention-based preambles. However, since Pr3 is still contained in the contention-free set, the UE continues to employ Pr3 in any random access, following the contention-free procedure.

Later still, in response to the receiving the broadcast in time slot X₃, the UE detects that its allocated preamble Pr3 is no longer contained in the contention-free set, as it has been re-allocate to the set of contention-based preambles. Accordingly, if the UE wishes to perform random access, it must now do so by selecting (at random) one of the contention-based preambles.

The set of contention-free preamble signatures may be explicitly contained in the broadcast from the eNodeB. However, this is not essential and, since preambles not in use as contention-based preambles can normally be assumed as reserved for use as contention-free preambles, the broadcast may alternatively contain only the set of contention-based preambles. In that case, if the UE's allocated contention-free preamble falls outside the set of preambles so broadcast, the UE should use it for contention-free RACH. If, on the other hand, the allocated preamble falls inside the set broadcast for contention-based access, the UE may not use it for contention-free access, and must follow the contention-based procedure instead.

Of course, it is also possible for the broadcast message to explicitly specify both the contention-free and contention-based preamble signatures.

According to the above explanation, a contention-free preamble allocated to a UE is revoked by means of a broadcast message issued periodically by the eNodeB. As an alternative, or in addition, to such a broadcast it is possible for the preamble to be activated/deactivated by fast signalling such as MAC signalling, or via PDCCH (including EPDCCH).

Some embodiments of the present invention will now be described in more detail.

Unless otherwise indicated, the embodiments described below are described in the context of LTE by way of example, where the wireless communication system (also referred to as the "network") comprises one or more base stations (also referred to as "eNodeBs"), each controlling one or more downlink cells, each downlink cell having a corresponding uplink cell. Each DL cell may serve one or more subscriber stations (also referred to as "terminals" and "UEs") which may receive and decode signals transmitted in that serving cell.

A PDCCH/EPDCCH message typically indicates whether the data transmission will be in the uplink (using PUSCH) or downlink (using PDSCH). The resource assignments granted by the eNodeB in the DL are determined using channel state information. This is provided by feedback from the UE based on channel measurements made using reference signals transmitted by the eNodeB for each cell that it supports. This feedback typically consists of data rate in the form of a channel quality indicator (CQI), a precoding matrix indicator (PMI), and rank indicator (RI).

In a first embodiment, for a UE that wants to initiate a random access process, it may either use a contention-based preamble signature, or a contention-free preamble signature, if it has been allocated a contention free preamble signature. The signature is defined as a combination of one or more of:
- A preamble sequence
- A time domain resource for transmission of the preamble
- A frequency domain resource for transmission of the preamble.

The contention-free access that a UE has been allocated will be revoked/reactivated in a timely fashion to allow more efficient contention-based access among the UEs that have no contention-free access. This is achieved by explicit broadcast signalling of the set of preambles for contention based access. If the contention free preamble falls within the set of preambles indicated for contention based access, the UE deactivates contention free access. If, at some later time, the contention free preamble falls outside the set of preambles indicated for contention based access, the UE re-activates contention free access.

In a variation of this embodiment, all UEs may use the same time and frequency domain resources for transmission of a preamble, and the preamble signature is defined only in terms of the preamble sequence.

A second embodiment is like the first, except that explicit signalling, which is included in a downlink broadcasted message, of a resource bit map is used to Indicate the allocation of preambles for the contention free access.

A variation of this embodiment is the use of implicit broadcast signalling, which includes in the downlink broadcast message, a resource bit map to indicate the allocation of contention-based preambles, which can implicitly inform UEs which preambles are activated for use in contention-free access.

Whilst it is efficient for the eNodeB to inform UEs of the contention-free and/or contention-based preambles by way of a broadcast, this is not essential and in principle UE-specific signalling to each connected UE could be employed, instead of or in addition to a broadcast message.

A third embodiment is like the first embodiment except that instead of signalling a number of preambles by using a bitmap, a UE can be configured with a contention free preamble by RRC signalling, but the use of this preamble is activated/de-activated by fast signalling such as:
- MAC signalling
- PDCCH
- EPDCCH

Thus, in the third embodiment a broadcast bit map is no longer necessary, although it may continue to be used.

A fourth embodiment is like the first embodiment except that in addition, after the UE determines that its contention free preamble is revoked or is also available for contention based access, this UE can:
1) Continue using the revoked preamble, but follow a contention based access procedure (as depicted in Figure 4), or
2) Refrain from using this contention free preamble, and use the contention-based random access procedure.

A fifth embodiment is like the first embodiment except that the UE may use both contention free and contention based access. The use of contention free access is reserved for particular purposes, such as requesting uplink resources, or requesting resources for high priority data. The ability to use both access procedures is changed according to whether the UE's allocated contention free preamble is currently within the set of contention based preambles or not. For example, in the case that the contention-free preamble is no longer available, the UE could be restricted to use only contention based access.

Figure 8 is a block diagram illustrating an example of a UE 10 to which the present invention may be applied. The UE 10 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 10 includes transmitter/receiver unit(s) 804 connected to at least one antenna 802 (together defining a communication unit) and a controller 806 having access to memory in the form of a storage medium 808. The controller 806 may be, for example, Microprocessor, digital signal processor (DSP), application-specific integrated circuit (ASIC), field-programmable gate array (FPGA), or other logic circuitry programmed or otherwise configured to perform the various functions described above, such as determining whether a configured preamble falls within the set of preambles available for contention-free (or alternatively, contention-based) access in the manner outlined above. For example, the various functions described above may be embodied in the form of a computer program stored in the storage medium 808 and executed by the controller 806. The transmission/reception unit 804 is arranged, under control of the controller 806, to receive signals from an eNodeB such as RRC configuration of a contention-free preamble, periodic broadcasts of sets of contention-based (and/or contention-free) preambles, and so forth as discussed previously.

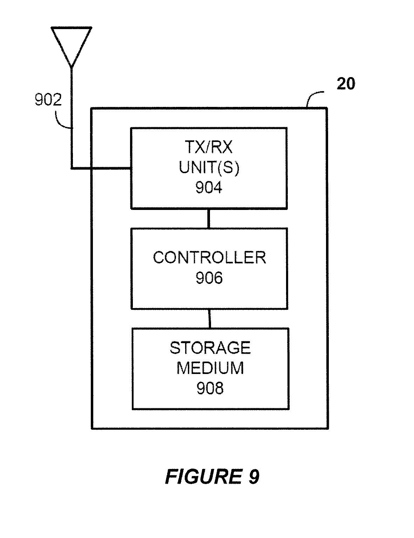

Figure 9 is a block diagram illustrating an example of an eNodeB 20 to which the present invention may be applied. The base station 20 includes transmitter/receiver unit(s) 904 connected to at least one antenna 902 (together defining a communication unit) and a controller 906. The controller may be, for example, Microprocessor, DSP, ASIC, FPGA, or other logic circuitry programmed or otherwise configured to perform the various functions described above, such as initially configuring each UE with a specific contention-free preamble, and subsequently broadcasting the sets of preambles available for contention-based (and/or contention-free) access. For example, the various functions described above may be embodied in the form of a computer program stored in the storage medium 908 and executed by the controller 906. The transmission/reception unit 904 is responsible for UE-specific signalling and broadcast messages under control of the controller 906.

Various modifications are possible within the scope of the present invention.

In the description above it was assumed that if a contention-free preamble signature (e.g., defined in terms of a preamble sequence) is assigned to one UE, it is not assigned to any other UE in the same cell. However, this is not essential and it would be possible to allocate the same preamble signature to more than one UE. This may be useful, for example, where the eNodeB serves many machine-type devices (MTC), each of which may only occupy the uplink for relatively short periods (and/or using different frequencies), such that the possibility of mutual collision is low.

Above it was assumed that if a preamble is not in the set of preambles for contention-free access, it is available for contention-based access (or vice-versa). However, this is not necessarily the case, as it would be possible for some preambles to be reserved (not available for either purpose). If so then this fact can simply be notified to the UEs so that they can correctly derive the set of contention-free or contention-based preambles, as the case may be, from the broadcast set. Alternatively a multi-level broadcast bit map may be used as already mentioned.

As a further variation, it would be possible to broadcast the set of revoked preambles so that a UE can easily identify whether its configured preamble is available for contention-free use.

The invention has been described with reference to LTE/LTE-A but could also be applied to other communications systems such as UMTS and WiMAX.

Any of the embodiments and variations mentioned above may be combined in the same system. Features of one embodiment may be applied to any of the other embodiments.

In any of the aspects or embodiments of the invention described above, the various features may be implemented in hardware, or as software modules running on one or more processors.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be understood that various changes and/or modifications may be made to the particular embodiments just described without departing from the scope of the claims.

### Industrial Applicability

Thus, embodiments of the present invention involve a contention-free activation/deactivation mechanism in PRACH, which allows dynamic allocation of the contention-free and contention-based preambles. This allows contention-free preambles which have been allocated to a UE to be revoked once contention-free operation is no longer needed, or cannot be supported due to a shortage of preambles.

This mechanism can improve the efficiency of PRACH, alleviating the drawbacks which result when the configuration of the UE to use contention-based and contention-free preamble signatures, from the fixed number of preamble signatures, is by UE-specific semi-static signalling. Embodiments of the present invention make the use of the two categories of signatures dynamic, and thus improve the efficiency of PRACH. When enough preambles are available, UEs can benefit from contention-free access. When contention-free access is not appropriate, UEs which have not been allocated with contention-free preambles may be given a larger selection of contention-based preambles to choose from, reducing the chance of a random access collision.

## Claims

1. A wireless communication method for use in a wireless communication system comprising a base station communicating with at least one terminal, the method comprising:
the base station configuring said terminal with a preamble signature to be used for transmission of a preamble in a contention-free random access procedure; and
the base station, by subsequent signalling, dynamically activating and/or deactivating the use by said terminal of said preamble signature in said contention-free random access procedure.

2. The wireless communication method according to claim 1 wherein the subsequent signalling comprises a broadcast to all terminals served by the base station.

3. The wireless communication method according to claim 1 or 2 wherein the subsequent signalling includes an indication of the preamble signatures available for contention-based random access.

4. The wireless communication method according to claim 1, 2 or 3 wherein the subsequent signalling includes an indication of the preamble signatures available for contention-free random access.

5. The wireless communication method according to any preceding claim wherein the subsequent signalling includes a bit map representing a set of preamble signatures.

6. The wireless communication method according to any preceding claim wherein the subsequent signalling comprises fast signalling from the base station to the said terminal.

7. The wireless communication method according to claim 6 wherein the configuring is performed by Radio Resource Control, RRC, signalling and the subsequent signalling comprises MAC, PDCCH or EPDCCH signalling.

8. The wireless communication method according to any preceding claim wherein the said terminal determines whether to perform a contention-free or contention-based random access procedure by checking whether the configured preamble signature is activated or deactivated and if activated, follows the contention-free random access procedure.

9. The wireless communication method according to claim 8 wherein when the configured preamble signature is deactivated, the terminal follows the contention-based random access procedure.

10. The wireless communication method according to claim 8 wherein the subsequent signalling identifies a set of all preambles available for contention-based access and the said terminal determines its configured preamble as activated if the configured preamble falls outside the identified set, otherwise determines the configured preamble as deactivated.

11. The wireless communication method according to any preceding claim wherein a preamble signature is **characterised by** at least one of:
a preamble sequence;
a time domain resource for transmission of said preamble; and
a frequency domain resource for transmission of said preamble.

12. A wireless communication system comprising a base station and at least one terminal, wherein:
the base station is arranged to configure said terminal with a preamble signature to be used for transmission of a preamble in a contention-free random access procedure, and to transmit subsequent signalling; and
said terminal is arranged to receive said configuration, to receive said subsequent signalling, and to determine whether or not to use the configured preamble signature in a contention-free random access procedure in dependence on said subsequent signalling.

13. A base station for use in a wireless communication system comprising the base station and at least one terminal, wherein:
the base station is arranged to configure said terminal with a preamble signature to be used for transmission of a preamble in a contention-free random access procedure, and to transmit subsequent signalling for dynamically activating and/or deactivating the use by the terminal of said preamble signature in said contention-free random access procedure.

14. A terminal for use in a wireless communication system comprising the terminal and a base station serving the terminal, wherein the terminal is arranged to be configured by the base station with a preamble signature to be used for transmission of a preamble in a contention-free random access procedure, and to receive subsequent signalling for dynamically activating and/or deactivating the use by the terminal of said preamble signature in said contention-free random access procedure.

15. Computer-readable instructions which, when executed by a processor of a transceiver device in a wireless communication system, cause the device to provide the base station according to claim 13 or the terminal according to claim 14.

## Amended claims

### Amended claims in accordance with Rule 137(2) EPC.

1. A wireless communication method for use in a wireless communication system comprising a base station (20) communicating with at least one terminal (10), the method comprising:
the base station (20) configuring said terminal (10) with a preamble signature to be used for transmission of a preamble in a contention-free random access procedure, the preamble signature including at least one of a preamble sequence, a time domain resource for transmission of said preamble and a frequency domain resource for transmission of said preamble; and **characterised by**
the base station (20) subsequently, on a subframe by subframe basis, activating and/or deactivating the use by said terminal (10) of said preamble signature in said contention-free random access procedure by a broadcast indicating whether the configured preamble signature is activated or deactivated.

2. The wireless communication method according to claim 1 wherein the broadcast includes an indication of the preamble signatures available for contention-based random access.

3. The wireless communication method according to claim 1 or 2 wherein the broadcast includes an indication of the preamble signatures available for contention-free random access.

4. The wireless communication method according to any preceding claim wherein the broadcast includes a bit map representing a set of preamble signatures.

5. The wireless communication method according to any preceding claim wherein, in addition to said broadcast, subsequent signalling comprises terminal-specific signalling from the base station (20) to the said terminal (10).

6. The wireless communication method according to claim 5 wherein the configuring is performed by Radio Resource Control, RRC, signalling and the subsequent signalling comprises MAC, PDCCH or EPDCCH signalling.

7. The wireless communication method according to any preceding claim wherein the said terminal (10) determines whether to perform a contention-free or contention-based random access procedure by checking whether the configured preamble signature is activated or deactivated and if activated, follows the contention-free random access procedure.

8. The wireless communication method according to claim 7 wherein when the configured preamble signature is deactivated, the terminal (10) follows the contention-based random access procedure.

9. The wireless communication method according to claim 7 wherein the broadcast identifies a set of all preambles available for contention-based access and the said terminal (10) determines its configured preamble as activated if the configured preamble falls outside the identified set, otherwise determines the configured preamble as deactivated.

10. A wireless communication system comprising a base station (20) and at least one terminal (10), wherein:
the base station (20) is arranged to configure said terminal (10) with a preamble signature to be used for transmission of a preamble in a contention-free random access procedure, the preamble signature including at least one of a preamble sequence, a time domain resource for transmission of said preamble and a frequency domain resource for transmission of said preamble, and said terminal (10) is arranged to receive said configuration; **characterised in that**
the base station (20) is arranged subsequently, on a subframe by subframe basis, to activate and/or deactivate the use by said terminal of said preamble signature in said contention-free random access procedure by a broadcast indicating whether the configured preamble signature is activated or deactivated; and
the terminal (10) is arranged to receive said broadcast, and to determine whether or not to use the configured preamble signature in a contention-free random access procedure in dependence on said broadcast.

11. A base station (20) for use in a wireless communication system comprising the base station and at least one terminal (10), wherein:
the base station (20) is arranged to configure said terminal (10) with a preamble signature to be used for transmission of a preamble in a contention-free random access procedure, the preamble signature including at least one of a preamble sequence, a time domain resource for transmission of said preamble and a frequency domain resource for transmission of said preamble; **characterised in that**
the base station (20) is arranged subsequently, on a subframe by subframe basis, to activate and/or deactivate the use by said terminal (10) of said preamble signature in said contention-free random access procedure by a broadcast indicating whether the configured preamble signature is activated or deactivated.

12. A terminal (10) for use in a wireless communication system comprising the terminal and a base station (20) serving the terminal, wherein the terminal is arranged to be configured by the base station with a preamble signature to be used for transmission of a preamble in a contention-free random access procedure; **characterised in that**
the terminal (10) is arranged subsequently, on a subframe by subframe basis, to receive a broadcast indicating whether the configured preamble signature is activated or deactivated to activate and/or deactivate the use by the terminal of said preamble signature in said contention-free random access procedure.

13. A computer-readable medium comprising computer program code means adapted to perform, when executed by a processor of a base station (20) and a terminal (10) in a wireless communication system, the wireless communication method according to claim 1.
